# EUROPEAN PATENT APPLICATION

(11) **EP 4 598 124 A1**
(43) Date of publication of application: **06.08.2025**
(21) Application number: 25155808.6
(22) Date of filing: 04.02.2025
(51) Int. Cl.: H04W 36/00, H04W 36/08, H04W 92/20

(54) **METHOD AND APPARATUS FOR LTM (L1/L2 TRIGGERED MOBILITY) SIGNALING**

(30) Priority: 05.02.2024 KR 20240017743; 30.12.2024 KR 20240199727
(71) Applicant: KT Corporation, Seongnam-si, Gyeonggi-do 13606 (KR)
(72) Inventor: HONG, Sung-pyo, Seongnam-si, Gyeonggi-do 13606 (KR)
(74) Representative: BCKIP Part mbB

(57) **Abstract**

Disclosed are a L1/L2 Triggered Mobility (LTM) signaling method and apparatus in a wireless communication system. A source base station transmits a handover request message including a layer 1 (L1)/layer 2 (L2) triggered mobility (LTM) information request to a target base station and receives a handover acknowledge message including an LTM information response from the target base station. Further, the target base station transmits a first message for cancelling already prepared LTM to the source base station, and the source base station receives the first message.

## Description

### CROSS-REFERENCE TO RELATED THE APPLICATION

This application is based on and claims priority on Patent Application No. 10-2024-0017743 filed on Feb. 5, 2024 and No. 10-2024-0199727 filed on Dec. 30, 2024 in the Korean Intellectual Property Office.

### BACKGROUND

### Technical Field

The present disclosure relates to wireless communication applicable to 5G NR, 5G-Advanced and 6G.

### Description of the Related Art

With the increase in the number of communication devices, there is a corresponding rise in communication traffic that must be managed. To address this increased communication traffic, a next generation 5G system, which is an enhanced mobile broadband communication system compared to the exiting LTE system, has become essential. Such a next generation 5G system has been designed based on scenarios which are classified into Enhanced Mobile BroadBand (eMBB), Ultra-reliability and low-latency communication (URLLC), Massive Machine-Type Communications (mMTC), and others.

eMBB, URLLC, and mMTC represent next generation mobile communication scenarios. eMBB is characterized by high spectrum efficiency, high user experience data rate, and high peak data rate. URLLC is characterized by ultra-reliable, ultra-low latency, and ultra-high availability (e.g., vehicle-to-everything (V2X), Emergency Service, and Remote Control). mMTC is characterized by low cost, low energy consumption, short packets, and massive connectivity (e.g., Internet of Things (IoT)).

### SUMMARY

The present disclosure relates to L1/L2 Triggered Mobility (LTM) for a terminal (e.g., user equipment: UE) in a wireless communication system. The present disclosure is to provide a signaling method and apparatus for supporting inter-gNB-central unit (CU) LTM.

According to an embodiment, a signaling method in a wireless communication system may be provided. The signaling method of a source base station may include transmitting a handover request message including an LTM information request to a target base station, receiving a handover acknowledge message including an LTM information response from the target base station, and receiving a first message for cancelling already prepared LTM from the target base station.

According to another embodiment, a signaling method in a wireless communication system may be provided. The signaling method of a target base station may include receiving a handover request message including a layer 1 (L1)/layer 2 (L2) triggered mobility (LTM) information request from a source base station, transmitting a handover acknowledge message including an LTM information response to the source base station, and transmitting a first message for cancelling already prepared LTM to the source base station.

According to further another embodiment, a source base station in a wireless communication system may be provided. The source base station may include at least one processor; and at least one memory configured to store instructions and operably electrically connectable to the at least one processor, wherein operations performed based on the instructions executed by the at least one processor include: transmitting a handover request message including a layer 1 (L1)/layer 2 (L2) triggered mobility (LTM) information request to a target base station; receiving a handover acknowledge message including an LTM information response from the target base station; and receiving a first message for cancelling already prepared LTM from the target base station.

According to still another embodiment, a target base station in a wireless communication system may be provided. The target base station may include at least one processor; and at least one memory configured to store instructions and operably electrically connectable to the at least one processor, wherein operations performed based on the instructions executed by the at least one processor include: receiving a handover request message including a layer 1 (L1)/layer 2 (L2) triggered mobility (LTM) information request from a source base station; transmitting a handover acknowledge message including an LTM information response to the source base station; and transmitting a first message for cancelling already prepared LTM to the source base station.

The source base station may transmit a second message for updating an LTM configuration to the target base station, after receiving the handover acknowledge message from the target base station, and the target the base station may receive the second message. Here, the second message may include base station node UE Xn application protocol (XnAP) identity (ID) assigned by the target base station.

The assigned criticality of the LTM information request may be set to reject.

The LTM information request includes channel state information (CSI) resource configuration information and/or information for requesting a channel state information-reference signal (CSI-RS) configuration.

The first message may include at least one of source base station node UE Xn application protocol (XnAP) identity (ID), target base station node UE XnAP ID, and a new radio (NR) cell global identifier (CGI) for an LTM candidate cell to be canceled.

### BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIG. 7 illustrates the procedure for inter-gNB LTM according to an embodiment of the disclosure.
FIG. 8 is a block diagram showing apparatuses according to an embodiment of the disclosure.
FIG. 9 is a block diagram showing a terminal according to an embodiment of the disclosure.
FIG. 10 is a block diagram of a processor in accordance with an embodiment.
FIG. 11 is a detailed block diagram of a transceiver of a first apparatus shown in FIG. 8 or a transceiving unit of an apparatus shown in FIG. 9.

### DETAILED DESCRIPTION

The technical terms used in this document are for merely describing specific embodiments and should not be considered limiting the embodiments of disclosure. Unless defined otherwise, the technical terms used in this document should be interpreted as commonly understood by those skilled in the art but not too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". For another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

Abase station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on an long term evolution (LTE) system, an LTE-advanced (LTE-A) system, and an new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

**Table 1**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE- A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

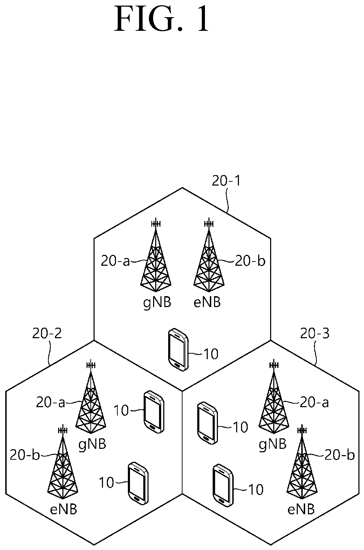

FIG. 1 is a diagram illustrating a wireless communication system.

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. Abase station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

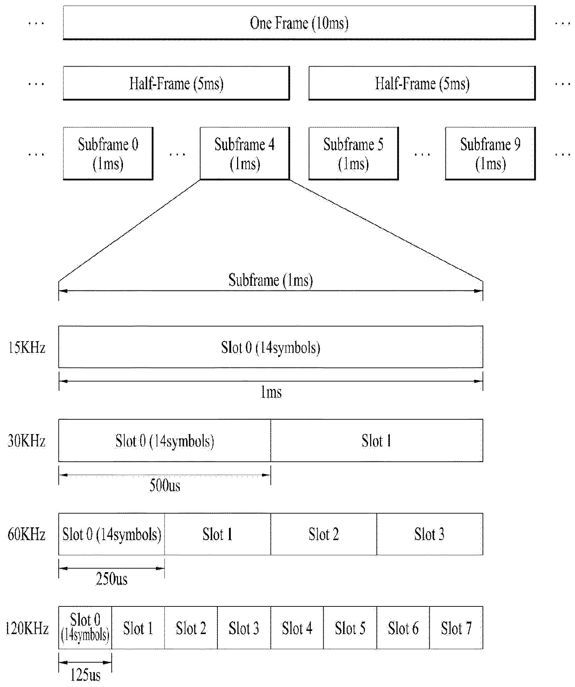

**FIG. 2** **is a diagram illustrating a structure of a radio frame used in new radio (NR).**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

### <Support of Various Numerologies>

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by µ).

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) according to each numerology expressed by µ in the case of a normal CP.

**Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) of a numerology represented by µ in the case of an extended CP.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

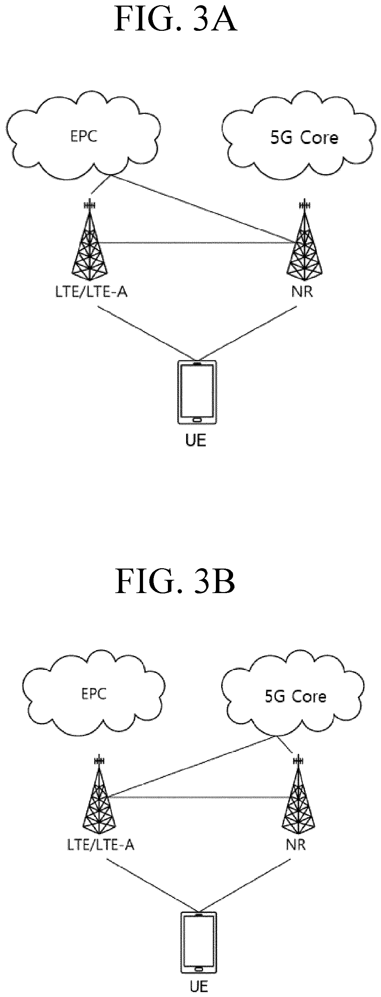

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

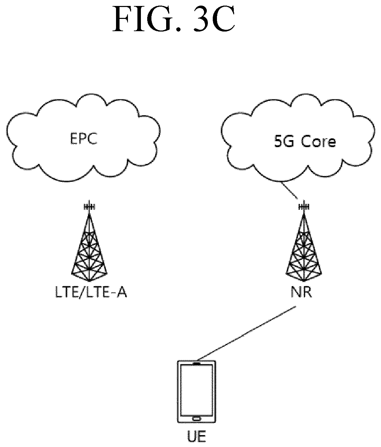

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

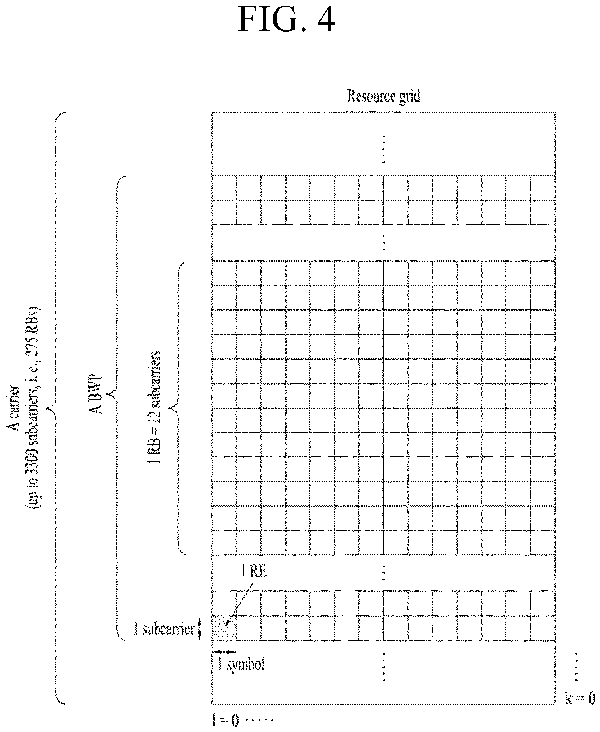

**FIG. 4** **illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

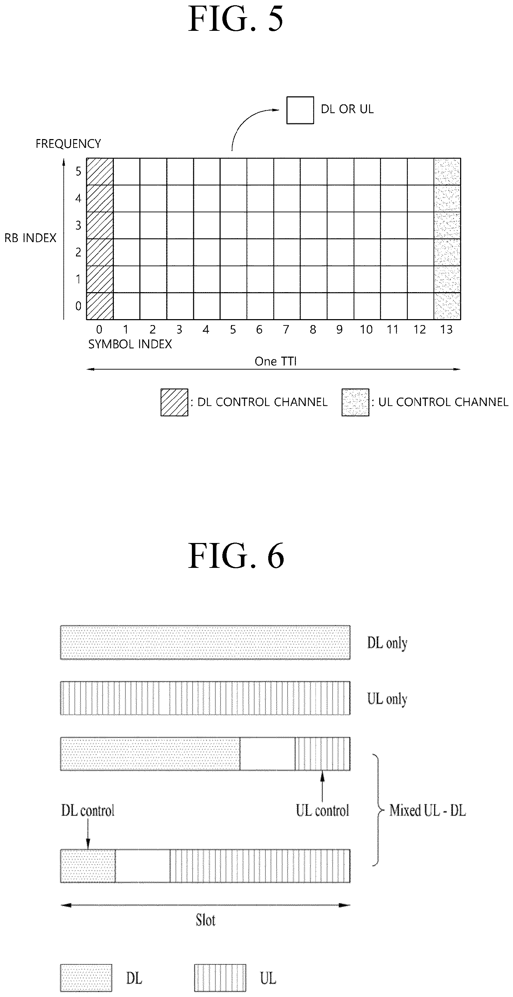

**FIG. 5** **shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

**FIG. 6** **illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.
1. DL only configuration
2. UL only configuration
3. Mixed UL-DL configuration
   - DL region + Guard Period (GP) + UL control region
   - DL control region + GP + UL region
      DL region: (i) DL data region, (ii) DL control region + DL data region
      UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some of symbols within a subframe that transition from DL to UL mode may be configured as the GP.

### LTM (L1/L2 Triggered Mobility)

The present disclosure relates to L1/L2 Triggered Mobility (LTM) for a UE.

In 3GPP, standardization of L1/L2 Triggered Mobility (LTM) functions was carried out in release-18 (Rel-18). Hereinafter, L1/L2 Triggered Mobility is referred to as LTM for the convenience of description. However, this is only for the convenience of description. The embodiments are not limited thereto. The term "LTM" may be replaced by any names such as Layer 1 Mobility, Layer 2 Mobility, and lower layer Mobility. In particular, the LTM refers to a procedure of the gNB for receiving an L1 measurement report from the UE and changing a serving cell (e.g., PCell/PSCell) of the UE based on the L1 measurement report by a cell switch command signaled through a medium access control (MAC) control element (CE). The cell switch command instructs the configuration of an LTM candidate prepared in advance by the gNB and provided to the UE through radio resource control (RRC) signaling. The UE switches to the target cell based on the cell switch command.

The Rel-18 LTM supports both intra-gNB-Distributed Unit (DU) Mobility and intra-gNB-Central Unit (CU) Mobility. That is, in the prior art, the LTM supported only cell change within the gNB-CU (intra-gNB-CU mobility). Therefore, to provide mobility between different base stations/gNB-CUs (e.g., inter-gNB-CU mobility) to the UE, a handover method based on a typical layer 3 (L3) should be used rather than LTM. The typica layer 3 based handover is a network-based handover in which a source base station sends an RRC reconfiguration message containing information required to access a target cell (e.g., reconfigurationwithsync, a handover command) to trigger a handover, or a conditional handover executed by the UE when handover execution conditions are met). Thus, an interruption time may increase compared to that of the LTM during the cell change process. Further, to support inter-base station LTM, a specific signaling method for LTM configuration between the base stations is required, but such a method has yet to be introduced. Here, the aforementioned gNB-CU refers to a logical node that hosts the radio resource control (RRC), service data adaptation protocol (SDAP), and packet data convergence protocol (PDCP) layers of the base station (or a logical node that hosts one or more of the radio access upper layer protocols). To support efficient network construction, NR provides a structure for dividing the base stations (gNB) into centralized nodes (hereinafter referred to as CU/gNB-CU for the convenience of description) and distributed nodes (hereinafter referred to as DU/gNB-DU for the convenience of description). The wireless network includes one set of base stations connected to a 5G Core network (5GC) through an NG interface. The Base stations are interconnected through an Xn interface. One base station may include one gNB-CU and one or more gNB-DUs. The gNB-CU and the gNB-DU are connected through an F1 interface. One gNB-DU is connected to only one gNB-CU. The NG interface and Xn-C interface for one base station including the gNB-CU and gNB-DU are terminated at the gNB-CU. The gNB-DUs connected to the gNB-CU are regarded as only one base station to other base stations and 5GC. The gNB-DU refers to a logical node that hosts the radio link control (RLC), medium access control (MAC), and physical (PHY) layers of a base station (or a logical node that hosts one or more radio access protocols not included in the gNB-CU). One gNB-DU supports one or multiple cells. One cell is supported by only one gNB-DU.

As described above, the typical LTM supports only intra gNB-CU mobility. To provide inter-gNB-CU mobility, an L3-based handover method must be used rather than the LTM, which introduces a problem in that the interruption time increases during the cell change process compared to the LTM. To solve this problem, the disclosure proposes a signaling method and apparatus to support inter-base station LTM (e.g., inter-gNB-CU LTM).

Hereinafter, a method of providing mobility will be described in detail based on 5G NR wireless access technology. However, embodiments of the disclosure are not limited thereto. Such description is only for the convenience of description. The embodiments of the disclosure may be applied to the cell change/switch based on any wireless access technology (e.g., 6G). The embodiments of the disclosure may be described with reference to the information elements, procedures, and operation contents specified in the NR standards (e.g., NR MAC standards, i.e., TS 38.321, and the NR RRC standards, i.e., TS 38.331). Although the definition of the information element, the related procedures, and the related UE operation contents are not described in this specification, the corresponding contents specified in the standard specifications, which are publicly known technologies, may be included in the disclosure. The embodiments set forth herein may be implemented individually or in any combination thereof, which clearly falls within the scope of the disclosure.

Any functions described below may be defined as an individual UE radio capability or UE Core network capability and transmitted to the base station/core network entity (for example, Access and Mobility Management Function (AMF)/ Session Management Function (SMF)) by the UE through corresponding signaling. Alternatively, any functions may be combined, defined as the UE capability, and transmitted to the base station/core network entity through the corresponding signaling by the request of the UE.

The base station may transmit/instruct information indicating the allowance /support/configuration/activation states of the corresponding functions/function combination for any functions or a combination of functions set forth herein to the UE through an RRC message. For example, this information may be instructed to the UE before or after the configuration/application of the corresponding functions/function combination, or simultaneously with the configuration/application of the functions/function combination. The RRC message may be broadcast through system information. Alternatively, the information may be instructed to the UE through a dedicated RRC message.

The typical 3GPP Rel-18 LTM instructs the cell switch command based on the MAC CE. However, the disclosure may also include an LTM method of instructing the cell switch command through not only the MAC CE but also downlink control information (DCI).

### Method of distinguishing between and processing LTM-supported base stations and non-supported base stations

The typical LTM supports only cell change within the gNB-CU (intra-gNB-CU mobility). Therefore, LTM-based cell change can be supported between cells provided through the gNB-DUs connected to the corresponding base station/gNB-CU within the corresponding base station/gNB-CU. However, to provide mobility between different base stations/gNB-CUs (e.g., inter-gNB-CU mobility), a serving base station needs to recognize whether a neighboring base station supports the LTM (e.g., the inter-gNB-CU-based LTM and/or the intra-gNB-CU based LTM). Otherwise, unnecessary errors may occur during the signaling process.

For example, during a base station setup/configuration process, LTM support information may be transmitted and received between the base stations so that the LTM support base stations can request and receive an LTM candidate configuration therebetween. The LTM support base station may request the LTM candidate configuration to only the neighboring base stations that support the LTM and receive responses from those neighboring base stations. The LTM support information may include any information for the LTM candidate configuration included in this specification, such as information for indicating whether the corresponding cell/base station supports the LTM (or inter-CU LTM), and an LTM information request (e.g., LTM Information request information element (IE)/IE-group.

For example, the corresponding information may be transmitted as part of an Xn setup procedure (e.g., an Xn Setup request, an Xn Setup response). This procedure updates an application-level configuration required for the two base stations to properly interoperate through an Xn-C interface.

For another example, the corresponding information may be transmitted as part of an NG-RAN node configuration update procedure (e.g., NG-RAN node configuration update, RAN node configuration update acknowledge). This procedure updates the application-level configuration required for two base stations to properly interoperate through the Xn-C interface.

For another example, if a neighboring base station does not support (or cannot support) the LTM, the neighboring base station may transmit information to indicate to the other base station that it does not support the LTM. For example, for any XnAP message initiated from the base station (e.g., an XnAP message including the LTM support information), the LTM non-support (or ignorance/failure/rejection/nonresponse to the LTM information requests) may be transmitted as included in the response/acknowledgement/failure/refusal messages to the corresponding XnAP message. This information may be included in CAUSE information or may be defined and included as a separate information element.

For another example, the source base station/gNB-CU may transmit an XnAP message for making an LTM candidate addition/modification request (for example, a handover request or a new XnAP message distinct from the handover request (e.g., an LTM candidate addition request) together with the LTM information request information element (or information element group) to a target/candidate base station. If the target/candidate base station does not recognize the corresponding information element, the target/candidate base station may reject the corresponding procedure. To this end, the assigned criticality of the information element may be defined as reject. The assigned importance information may indicate (e.g., specify) the action to take upon receiving an information element or an information element group that is not recognized. When a receiving node receives a message with an information element marked as a reject IE that is not recoginzed, the receiving node may reject that procedure. For the convenience of description, LTM support instruction information included in the XnAP message for the source base station/gNB-CU to request the LTM candidate addition/modification to the target/candidate base station (or information for an LTM candidate configuration or LTM-related information) will be denoted as an LTM information request information element (IE). This is for the convenience of description and may be replaced with any other name. The assigned criticality of the LTM information request IE may be set to reject.

### LTM signaling information between base stations for adding/editing LTM candidates

For example, if the source base station/gNB-CU transmits the XnAP message, which is to make a request for the LTM candidate addition/modification, together with the LTM information request IE to the target/candidate base station, the target/candidate base station may transmit an acknowledge XnAP message (for example, a handover request acknowledge or a new XnAP message distinct from the handover request acknowledge (e.g., LTM candidate addition request acknowledge)) together with an LTM information request acknowledge/response information element (or information element group).

For another example, if the source base station/gNB-CU transmits the LTM information request IE as included in the XnAP message for requesting the LTM candidate addition/modification to the target/candidate base station and the target/candidate base station rejects the corresponding LTM mobility (or the corresponding LTM candidate addition/modification) (or a failure occurs during handover preparation), the target/candidate base station may include at least one piece of followings: the requested target/candidate cell ID, requested LTM candidate configuration ID, and requested LTM candidate physical cell identifier (PCI) in the corresponding failure message.

For another example, the source base station/gNB-CU may transmit information, which is needed for the target/candidate base station to prepare/generate an LTM candidate configuration (e.g., LTM-Candidate IE or ltm-CandidateConfig), to the target/candidate base station. Here, the LTM candidate configuration (LTM-Candidate) IE refers to configuration information related to the LTM candidate configuration to be added/modified and may include ltm-CandidateId indicating the LTM candidate configuration in the sub-configuration information, ltm-CandidateConfig indicating the RRC reconfiguration message/information element used to configure one LTM candidate cell, ltm-CandidatePCI indicating a special PCI included in ltm-CandidateConfig, ltm-DL-OrJointTCI-StateToAddModList/ltm-UL-TCI-StatesToAddModList indicating a list of TCI states to be added/modified for the LTM, ltm-ConfigComplete indicating whether the LTM candidate configuration is complete, ltm-EarlyUL-SyncConfig indicating information used to perform early uplink synchronization, and ltm-SSB-Config indicating information for instructing the SS/PBCH block configuration used for L1 measurement.

For example, information required to prepare/generate an LTM candidate configuration may include an LTM configuration (LTM-Config) or one or more pieces of sub-configuration information included in the LTM configuration. The LTM configuration includes LTM-reference configuration including an RRC reconfiguration message used to configure the reference configuration for the LTM (ltm-reference configuration), information to instruct the LTM cell switch when the selected cell is an LTM candidate cell and it is the first cell selection after failure (attemptLTM-Switch), LTM candidate configuration list information to be added/modified (ltm-CandidateToAddModList), LTM candidate configuration list information to be released (ltm-CandidateToReleaseList), an LTM CSI resource list to be added/modified and/or released (ltm-CSI-ResourceConfigList), L2 reset instruction information for the serving cell (to determine whether to reset the L2 for the candidate cell) (e.g. ltm-ServingCellNoResetID or information to determine/instruct whether to reset the L2 for the serving cell), and information used by the UE to determine whether to perform UE-based TA measurement (ltm-ServingCellUE-MeasuredTA-ID) as sub-configuration information elements.

For another example, information required to prepare/generate an LTM candidate configuration may include at least one of following: at least one sub-configuration (for example, LTM-reortedContent, LTM-ReportConfigType, ltm-ResourcesForChannelMeasurement) included in CSI measurement configuration information (CSI-MeasConfig) or LTM CSI report configuration information (LTM-CSI-ReportConfig) or the LTM CSI report configuration. The CSI measurement configuration information (CSI-MeasConfig) may refer to the 3GPP RRC standards, i.e., TS 38.331. In other words, the CSI measurement configuration information (CSI-MeasConfig) is an information element used to configure the CSI-RS belonging to the serving cell in which that configuration is included, and channel state information reports (The IE CSI-MeasConfig is used to configure CSI-RS (reference signals) belonging to the serving cell in which CSI-MeasConfig is included, channel state information reports to be transmitted on PUCCH on the serving cell in which CSI-MeasConfig is included and channel state information reports on PUSCH triggered by DCI received on the serving cell in which CSI-MeasConfig is included). The CSI RS resource information is included as the sub-configuration element. Referring to 3GPP TS 38.331, the CSI measurement configuration information (CSI-MeasConfig) includes CSI-reference signal resource configuration information (nzp-CSI-RS-ResourceToAddModList) as the sub-configuration information.

For another example, the information required to prepare/generate the LTM candidate configuration may include the LTM candidate configuration or one or more sub-configuration information included in the LTM candidate configuration.

For another example, the XnAP message for requesting LTM candidate addition/modification (for example, a handover request or a new XnAP message distinct from the handover request (e.g., LTM candidate addition request)), and an inter-node RRC message included in that message may include an LTM configuration, an LTM candidate configuration, an LTM CSI report configuration, and at least one pieces of information included in the corresponding (e.g. the LTM configuration, the LTM candidate configuration, and the LTM CSI report configuration) sub-configurations.

For another example, the aforementioned inter-node RRC message may be a hand over preparation message or an inter-node RRC message defined as information distinct from the hand over preparation message.

For another example, information required to prepare/generate the LTM candidate configuration may be included in the foregoing LTM information request IE. Alternatively, the information required to prepare/generate the LTM candidate configuration may be included in an information element distinct from the LTM information request information element described above.

For another example, information required to prepare/create the LTM candidate configuration may include information to distinguish whether the LTM candidate configuration request is triggered based on the addition of an LTM candidate or based on the modification/change/replacement of the LTM candidate. If that information is set and transmitted as triggered based on the modification/change/replacement of the LTM candidate, the target/candidate base station may perform the process by using/considering that information. For example, if the information is set and transmitted as triggered based on the modification/change/replacement of the LTM candidate but there is no target/candidate configuration prepared for the included target/candidate Target NG-RAN node UE XnAP ID, or if the target/candidate cell/configuration with the target/candidate cell ID (or target/candidate configuration ID/index) has not been prepared (using the same UE associated signaling connection), then the (target/candidate) base station may reject the corresponding procedure by using a failure/reject XnAP message (e.g., Handover preparation failure or LTM candidate addition/modification/replace request reject).

For another example, information required to prepare/generate the LTM candidate configuration may include an LTM candidate cell ID list. With this, at least one of the following: LTM candidate cell IDs, LTM candidate configuration IDs, and LTM candidate PCIs for one or more LTM candidate cells of the corresponding target/candidate base station (or target/candidate base stations for the corresponding UE) may be transmitted.

For another example, the LTM candidate cell ID information may include at least one of followings: target/candidate cell global IDs (e.g., NR cell global identifier (CGI), and E-UTRAN CGI), PCI, LTM candidate configuration IDs (e.g., ltm-CandidateId or ltm -CandidateId minus 1).

For another example, the LTM information request information element may include a sub-information element for requesting the LTM candidate configuration.

For another example, the LTM information request information element may include sub-information elements for requesting (any/specific) sub-information elements of CSI measurement configuration information/LTM-configuration/LTM-candidate-configuration/LTM-CSI-report-configuration.

For another example, the source base station may send the target/candidate base station help information necessary for the target/candidate base station to allocate resources needed for the corresponding LTM candidate configuration. Upon receiving the help information, the target base station may consider/use the help information to allocate necessary resources.

For example, if the UE receives information indicating the probability of arriving at the candidate cell (e.g., estimated arrival probability) (for example, receives the information through a HANDOVER REQUEST message), the target base station may allocate the necessary resources by considering/using that information.

For another example, the help information necessary for the target/candidate base station to allocate the resources needed for configuring the LTM candidate may include at least one of followings: a measurement object container, a report configuration container (e.g., ReportConfig and/or LTM-CSI- ReportConfig), a measurement result container (e.g., Measurement Report RRC message), and an L1 measurement result (e.g., LTM CSI report) configured for the LTM candidate cell.

For another example, the target/candidate base station may send the source base station help information necessary for the source base station to request the LTM candidate configuration or help information necessary for the source base station to limit the LTM candidate configuration request. Upon receiving the help information, the source base station may request the LTM candidate configuration by considering the help information.

For example, if receiving information to indicate the maximum number of LTM candidate preparations from the target/candidate base station/gNB-CU (e.g., receiving that information through a HANDOVER REQUEST ACKNOWLEDGE message), the source base station/gNB-CU may not prepare more LTM candidate cells than the number instructed to the target/candidate base station/gNB-CU for the same UE.

### Modification/Change/Release/Removal/Cancel of LTM candidate configuration of source/serving base station

The source/serving base station may instruct the LTM candidate configuration to be applied to the UE through signaling with the target/candidate base station. For example, the source/serving base station may transmit a handover request message to request the addition of an LTM candidate with the target/candidate base station and receive a handover request acknowledge message as a response to the handover request message. Then, the source/serving base station may attempt to modify/change/release/remove/cancel the LTM candidate configuration belonging to the target/candidate base station/gNB-CU/gNB-DU. The source/serving base station may include a target base station UE XnAP ID (Target NG-RAN node UE XnAP ID) allocated by the target/candidate base station in the previous LTM candidate configuration signaling process to inform this.

For example, when the source base station/gNB-CU transmits the XnAP message (for example, a handover request or a new XnAP message distinct from the handover request (e.g. LTM candidate addition request)) for requesting the LTM candidate addition/modification to the target/candidate base station, the XnAP message may include the target base station UE XnAP ID (Target NG-RAN node UE XnAP ID) within the LTM information request information element (or information element group).

For another example, when the source base station/gNB-CU transmits the XnAP message for requesting the LTM candidate addition/modification to the target/candidate base station, the XnAP message may include information indicating the LTM candidate cell/configuration release/removal (e.g., a target/candidate cell/configuration to be canceled/released).

For another example, if the source/serving base station/gNB-CU includes the target base station UE XnAP ID (Target NG-RAN node UE XnAP ID) in the XnAP message for requesting the LTM candidate addition/modification to the target/candidate base station (or if it includes information to instruct the release/removal of the LTM candidate cell/configuration), the target/candidate base station may remove the target base station UE XnAP ID and the LTM candidate configuration identified, present and prepared by the target/candidate cell global ID (or candidate configuration identification information).

For another example, to minimize the already prepared LTM mobility or already prepared LTM-configuration/LTM-candidate-configuration, the source/serving base station/gNB-CU may transmit the corresponding XnAP message (for example, handover cancel message or a new XnAP message distinct from the handover cancel message (e.g., LTM mobility cancel)) to the target/candidate base station. This message refers to signaling associated with the UE and may be defined as a "Class 2 elementary procedure." The source/serving base station/gNB-CU may use an appropriate cause value to indicate the reason for cancellation. This message may include at least one of a target/candidate cell list to be canceled, a target/candidate configuration list to be canceled, Source NG-RAN node UE XnAP ID IE, Target NG-RAN node UE XnAP ID, and Cause. The target/candidate cell information may transmit at least one piece of the following information: LTM candidate cell ID (e.g., NR CGI), LTM candidate configuration ID (e.g., ltm-CandidateId or ltm-CandidateId minus 1), LTM candidate PCI (Physical Cell ID). The target/candidate configuration information may indicate an LTM candidate configuration ID (e.g., ltm-CandidateId or ltm-CandidateId minus 1). If the message includes a list of target/candidate cells to be canceled and/or a list of target/candidate configurations to be canceled, the target/candidate base station/gNB-CU may consider that only resources for the cell/configuration identified by the included NR CGI and/or target/candidate configuration ID (e.g., ltm-CandidateId or ltm-CandidateId minus 1)) are released.

### LTM candidate cancellation of target/candidate base station

An RRC reconfiguration message containing the inter-gNB-CU LTM candidate configuration may be transmitted to the UE, and the candidate configuration may be stored through a UE variable. Then, depending on the operational states of the base station, the target/candidate base station may attempt to cancel the LTM candidate configuration associated with the target/candidate base station that has already been prepared (or transmitted to the source base station, or configured/stored in the UE). To support this, a procedure for the target/candidate base station to cancel the LTM already prepared for the source base station may be defined.

For example, the target/candidate base station may initiate the procedure by sending a message for canceling the LTM mobility or LTM candidate addition/modification to the source base station. The target/candidate base station may use an appropriate cause value to indicate the reason for cancellation. Upon receiving the message, the source base station may consider that the target/candidate base station is attempting to release any previously reserved resources from a candidate cell associated with the UE associated signaling identified by the Source NG-RAN node UE XnAP ID IE and/or the Target NG-RAN node UE XnAP ID IE. Upon receiving the message, the source base station may consider that the target/candidate base station is attempting to release any reference from the UE associated signaling identified by the Source NG-RAN node UE XnAP ID IE and/or Target NG-RAN node UE XnAP ID IE. If the message refers to content that is not present, the source base station may ignore the message. The message may include at least one of the following elements: Source NG-RAN node UE XnAP ID, Target NG-RAN node UE XnAP ID, Cause, and Candidate Cells To Be Cancelled List (for example, including at least one of target/candidate cell ID, and target/candidate configuration ID as a sub-configuration element).

For another example, to cancel the already prepared LTM mobility or already prepared LTM configuration, the target/candidate base station/gNB-CU may send the source/serving base station the corresponding XnAP message (for example, a conditional handover cancel message or a new XnAP message distinct from the conditional handover cancel message (e.g., a target LTM mobility cancel)). The XnAP message refers to signaling associated with the UE and may be defined as a "Class 2 elementary procedure." The target/candidate base station may use an appropriate cause value to indicate the reason for cancellation. Upon receiving the message, the source/serving base station/gNB-CU may consider that the target/candidate base station is attempting to release any previously reserved resources/configurations from the target/candidate cells associated with the UE-linked signaling identified by Source NG-RAN node UE XnAP ID IE and/or the Target NG-RAN node UE XnAP ID IE. Upon receiving this message, the source base station may consider that the target/candidate base station is attempting to remove/release any reference to the UE-linked signaling identified by the Source NG-RAN node UE XnAP ID IE and/or Target NG-RAN node UE XnAP ID IE. If the message refers to context that is not present, the source base station may ignore the message. The message may include at least one of the following elements: Source NG-RAN node UE XnAP ID, Target NG-RAN node UE XnAP ID, Cause, and Candidate Cells To Be Cancelled List (for example, including one or more between target/candidate cell ID, and target/candidate configuration ID as a sub-configuration element). If the message includes a list of target/candidate cells to be canceled and/or a list of target/candidate configurations to be canceled, the source/serving base station/gNB-CU may consider that only resources for the cells/configurations identified by the included NR CGI and/or target/candidate configuration ID (e.g. ltm- CandidateId or ltm-CandidateId minus 1).

Hereinafter another embodiment according to the disclosure will be described.

The typical LTM supports only cell change within a gNB-CU (intra-gNB-CU mobility). In other words, signaling between base stations was not necessary. However, in order to support the LTM mobility between different base stations/gNB-CUs (inter-gNB-CU LTM mobility), it may be necessary to support sequence number (SN) status transmission between the base stations so as to reduce service interruption and/or support lossless data transmission.

For example, when (or after) the source/serving base station receives early timing advance (TA) acquisition information from the target/candidate base station, the source base station may send the target/candidate base station a message for transmitting the SN status (e.g., a SN STATUS Transfer message/Early STATUS Transfer message, or an LTM SN STATUS message distinct from the SN STATUS Transfer message/Early STATUS Transfer message).

For example, the UE performs downlink (DL) synchronization on a candidate cell provided through a target/candidate base station before receiving a cell switch command. When UE-based TA measurement is configured, the UE obtains a TA value of a candidate cell by measurement, and/or the UE may obtain the TA of the candidate cell through Contention Free Random Access (CFRA) triggered by the PDCCH order from the source cell. The target/candidate gNB-DU providing the candidate cell may transmit early TA acquisition information to the target/candidate gNB-CU. The target/candidate base station/gNB-CU providing the candidate cell (or associated with the candidate cell or associated with the corresponding gNB-DU) may transmit the early TA acquisition information to the source base station. The source/serving base station may send the target/candidate base station the message (e.g. SN STATUS Transfer message) for transmitting the SN STATUS. The aforementioned early TA acquisition information may include at least one of a TA value, associated CFRA resource information, target/candidate cell ID, LTM configuration identification information associated with the target/candidate cell ID, target base station/gNB-CU ID, source gNB-DU ID, source serving cell ID, and source/serving base station/gNB-CU ID.

For another example, when (or after) the source/serving gNB-DU receives the L1 measurement report from the UE, the source/serving base station may send the target/candidate base station the message for transmitting the SN STATUS (e.g., an SN STATUS Transfer message/Early STATUS Transfer message or an LTM SN STATUS message distinct from the SN STATUS Transfer message/Early STATUS Transfer message).

For another example, when (or after) the source/serving gNB-DU decides to execute the LTM to the candidate/target cell (through an L1 measurement report received from the UE), the source base station may send the target/candidate base station a message for transmitting the SN STATUS (e.g., an SN STATUS Transfer message/Early STATUS Transfer message or an LTM SN STATUS message distinct from the SN STATUS Transfer message/Early STATUS Transfer message).

For another example, when (or after) the source base station transmits an LTM Cell Switch command (e.g., LTM Cell Switch MAC CE) to the UE, the source base station may send the target/candidate base station a message for transmitting the SN STATUS.

For another example, when (or after) the source base station/gNB-CU receives a "CELL SWITCH NOTIFICATION message" for instructing the initiation of a cell switch command to the UE from the source gNB-DU, the source base station may send the target/candidate base station the message for transmitting the SN STATUS.

For another example, when (or after) the target/candidate base station/gNB-CU sends the source base station/gNB-CU a message for indicating success in handover (e.g., HANDOVER SUCCESS message), the source base station may send the target/candidate base station the message for transmitting the SN STATUS.

For another example, the aforementioned message for transmitting the SN STATUS may include an SN STATUS Transfer message or an Early STATUS Transfer message. Alternatively, the aforementioned message for transmitting the SN STATUS may include an SN STATUS Transfer message or an XnAP message distinct from the Early STATUS Transfer message.

For another example, the aforementioned message for transmitting the SN STATUS includes a list of LTM candidate cells (e.g., including at least one of followings: LTM candidate cell IDs, LTM candidate configuration IDs (LTM-CandidateId, or LTM-CandidateId minus 1), LTM candidate PCIs, measurement object (measObjectToAddMod) containers specified in TS 38.331, and report configuration (reportConfigToAddMod) containers). The target/candidate base station may store the information in the UE context and use it.

For another example, the aforementioned message for transmitting the SN STATUS may include at least one of followings: a DRB ID forwarded by the source base station/gNB-CU to the target base station/gNB-CU, a PDCP sequence number (SN) of the first PDCP service data unit (SDU), a downlink COUNT value indicating a hyper frame number (HFN).

For another example, the aforementioned message for transmitting the SN STATU may include at least one of followings: a DRB ID and a discard downlink (DL) COUNT value as information about DRBs Subject To DL Discarding.

For another example, the aforementioned message for transmitting the SN STATUS may include an uplink PDCP SN receiver status for RLC acknowledge mode (AM) data radio bearer (DRB) to which PDCP status preservation is applied (e.g., a PDCP SN of the first lost UL PDCP SDU and a reception status bitmap of out-of-sequence UL PDCP SDUs that require retransmission by the UE in the target cell) and a downlink PDCP transmitter status (e.g., the next PDCP SN that the target gNB shall assign to new PDCP SDUs, not having a PDCP SN yet). Here, in the uplink PDCP SN receiver state, the first lost UL PDCP SDU indicates the start of the uplink PDCP SDUs to be transmitted by a user plane function (UPF).

For another example, after the source base station transmits an LTM cell switch command (e.g., LTM Cell Switch MAC CE) to the UE (or after the source base station/gNB-CU receives a "CELL SWITCH NOTIFICATION message" that instructs the UE to initiate the cell switch command from the source gNB-DU), the target/candidate base station/gNB-CU transmits a message for indicating success in handover (for example, a HANDOVER SUCCESS message) to the source base station/gNB-CU, so that the source base station can additionally transmit a message for transmitting the SN STATUS to the target/candidate base station until the source base station transmits the SN STATUS to the target/candidate base station. With this, it is possible to indicate the discard of PDCP SDUs that have already been forwarded. The target/candidate base station may prevent the forwarded downlink PDCP SDUs, of which COUNT is smaller than the transmitted downlink COUNT value, from being transmitted to the UE. Further, (if no transmission was attempted), the corresponding PDCP SDUs may be discarded.

For another example, the target/candidate base station may send the source base station a message containing the information to instruct the stop of transmitting the SN STATUS. The source base station may stop forwarding data to the target/candidate base station.

The typical intra-base station LTM may reduce delay/interruption due to mobility by enabling RACH-less LTM during the cell change process through early synchronization. Therefore, the early synchronization and/or RACH-less LTM supported in the typical intra-base station LTM may also be supported in the inter-base station LTM (Inter-gNB-CU LTM). To support the early synchronization and/or RACH-less LTM in an inter-base station LTM process, it is required to define specific procedures for supporting inter-base station processing over an Xn interface.

To support the early synchronization and RACH-less LTM in the inter-base station LTM process, the source/serving gNB-DU should be able to activate the TCI state of the candidate cell(s) belonging to the target/candidate gNB-DU while the source/serving gNB-DU and the target/candidate base station/gNB-DU are connected to different base stations/gNB-CUs. To configure information related to this in the UE, the source base station/gNB-CU may send an XnAP message for requesting the LTM candidate addition/modification to the target/candidate base station/gNB-CU (e.g., a handover request or a new XnAP message distinct from the handover request (e.g., LTM candidate addition request).

For example, the XnAP message may be transmitted including corresponding/related request information through an LTM information request information element (or information element group). For another example, the request information may include a target/candidate cell global ID (e.g., E-UTRA CGI or NR CGI). For another example, the request information may include LTM candidate configuration identification information (e.g., LTM Configuration ID, LTM-CandidateId defined in 3GPP TS 38.331) associated with the target/candidate cell global ID. For another example, the request information may include LTM reference configuration information (e.g., LTM Reference Configuration IE, or information for instructing to use the LTM reference configuration, or information for indicating whether to configure the LTM reference, or information for indicating LTM reference configuration request). For another example, if the corresponding information is included, the target/candidate base station/gNB-CU (or target/candidate gNB-DU associated with/connected to the target/candidate base station/gNB-CU) may take the information into account to generate the LTM configuration. Similarly, if the information is included, the target/candidate base station/gNB-CU (or target/candidate gNB-DU associated with/connected to the target/candidate base station/gNB-CU) may provide an LTM reference configuration for the target/candidate base station/gNB-CU/gNB-DU/Cell-group.

For another example, the request information may include information requesting early synchronization configuration. If this information (or any LTM information request information) is included, the target/candidate base station/gNB-CU (or the target/candidate gNB-DU associated with/connected to the target/candidate base station/gNB-CU) may generate and include the early synchronization configuration information for the target/candidate cells belonging to the target/candidate base station/gNB-CU/gNB-DU. For example, the target/candidate base station/gNB-CU may include at least one piece of information between a candidate transmission configuration indicator (TCI)-state configuration information (CandidateTCI-State/CandidateTCI-UL-State) list for the LTM candidate configuration, and RACH configuration information for the early synchronization. The candidate TCI-state configuration information for the LTM candidate configuration may be included in the LTM candidate configuration (LTM-Candidate) and may include one or more pieces of information between the list of downlink or joint TCI states to be added or deleted for the LTM (ltm-DL-OrJointTCI-StateToAddModList) and the list of uplink TCI states (ltm-UL-TCI-StatesToAddModList).

The target/candidate base station/gNB-CU may generate acknowledgment/response information to support the early synchronization and the RACH-less LTM and send the source/serving base station/gNB-CU the generated acknowledgment/response information as included in an acknowledgment XnAP message (for example, handover request acknowledge or a new XnAP message distinct from the handover request acknowledge (e.g., LTM candidate addition request acknowledge)) to the XnAP message for requesting the LTM candidate addition/modification.

For example, the XnAP message may be transmitted including the corresponding response/acknowledge information through the LTM information request acknowledge information element (or information element group). For another example, the response/acknowledge information may include an LTM candidate configuration associated with a cell belonging to the target/candidate base station/gNB-CU/gNB-DU. For another example, the response/acknowledge message may include a list of candidate TCI-state configuration information (CandidateTCI-State) for the LTM candidate configuration. The candidate TCI-state configuration information for the LTM candidate configuration may be included in the LTM candidate configuration (LTM-Candidate) and may include at least one piece of information between the list of downlink or joint TCI states to be added or deleted for the LTM (ltm-DL-OrJointTCI-StateToAddModList) and the list of uplink TCI states (ltm-UL-TCI-StatesToAddModList). The candidate TCI-state configuration information may include TCI-state ID, Quasi Co-Location (QCL)-type, and corresponding reference signal synchronization signal block (SSB)-index as sub-information elements. For another example, the response/acknowledge message may include configuration information for the early synchronization (e.g., rach-ConfigGeneric: RACH parameters for performing a random access procedure on a candidate cell, frequencyInfoUL: basic parameters of an uplink carrier for PRACH transmission on a candidate cell, n-TimingAdvanceOffset: N_TA-Offset to be applied for all uplink transmissions on a candidate cell, etc.)

The UE may initiate an uplink TA acquisition procedure (or early synchronization procedure) to one or more cells different from the current serving cell. The source/serving base station/gNB-CU/gNB-DU may allow the UE to perform the early synchronization/TA-acquisition of the target/candidate cell before the LTM cell switch (or before transmitting a cell switch command to the UE). For example, the early synchronization/TA-acquisition may be triggered by a PDCCH order. When Contention Free Random Access (CFRA) is triggered by the PDCCH order, the UE may transmit a random access preamble to the indicated target/candidate cell. The target/candidate cell (or the base station/gNB-CU/gNB-DU to which the target/candidate cell belongs) that received the random access preamble may calculate a corresponding TA value. The base station/gNB-CU to which the target/candidate cell belongs may transmit the corresponding TA value to the base station/gNB-CU, to which the source/serving cell belongs, through the XnAP message. With this, the base station/gNB-CU/gNB-DU to which the source/serving cell belongs may consider (or recognize) that the corresponding UE has (successfully) performed/completed the early synchronization/TA-acquisition procedure with the target candidate cell/gNB-DU. The base station/gNB-CU/gNB-DU to which the source/serving cell belongs may trigger the LTM cell switch by issuing the LTM cell switch MAC CE containing the corresponding TA value to the UE. The UE may apply the corresponding TA value. Then, the UE may perform the RACH-less LTM. It is necessary to specifically define the XnAP message including the corresponding TA value.

For example, an XnAP message including the corresponding TA value may be defined as a UE-associated signaling message. For the transmission of that information, a logical Xn connection associated with the UE is maintained to transmit that information, so that the base station/gNB-CU can easily perform subsequent procedures for the UE. For the received XnAP message, the base station/gNB-CU may identify and process the UE associated with the base station-CU UE XnAP ID and/or gNB-ID.

The XnAP message including the corresponding TA value may use Source/Old NG-RAN node UE XnAP ID, and Target/New NG-RAN node UE XnAP ID included in the XnAP message for requesting the LTM candidate addition/modification (for example, a handover request or a new XnAP message distinct from the handover request (e.g., LTM candidate addition request)) and/or the acknowledgement XnAP message to the XnAP message for requesting the LTM candidate addition/modification (for example, a handover request acknowledge or a new XnAP message distinct from the handover request acknowledge (e.g., LTM candidate addition request acknowledge)).

The XnAP message including the TA value may include at least one value of target/candidate cell ID (e.g., NR CGI), TA value, preamble index, RA-RNTI, source gNB-DU ID, source/serving cell ID (e.g. NR CGI), and source base station/gNB-CU ID to identify/distinguish the base station/gNB-CU/gNB-DU/UE to which the TA is applied.

For another example, when the target/candidate gNB-DU receives a random access preamble used for the early synchronization from a UE with an LTM configured later, an F1 application protocol (F1AP) message for transmitting the corresponding TA value to the target/candidate base station/gNB-CU may be additionally defined as a UE-associated signaling message. The F1AP message may use gNB-CU UE F1AP ID, and gNB-DU UE F1AP ID when the target/candidate base station/gNB-CU transmits an F1AP (e.g. UE context setup request) message to the target/candidate gNB-DU to generate an LTM candidate configuration.

Meanwhile, in the typical intra-base station LTM, non-UE-associated signaling was defined and applied when the TA value is transmitted between different gNB-DUs associated with the same base station/gNB-CU. Because a UE context is configured for the LTM configuration even between different gNB-DUs connected within one base station (gNB-CU), the UE may be distinguished and used even if the corresponding TA value is transmitted using the F1AP message that is not associated with the UE. However, in the case of using the XnAP message that is not associated with the UE between different base stations, it may be difficult to transmit the corresponding TA value between the source/serving cell and the target/candidate cell and use the transmitted TA value for the UE.

For another example, the XnAP message including the corresponding TA value may be defined as a non-UE-associated signaling message. For the transmission of that information, the information may be transmitted without a need to maintain the logical Xn connection associated with the UE. The base station/gNB-CU may identify the UEs associated with the base station-CU UE XnAP ID and/or gNB-ID and may not perform processing. However, the target/candidate base station/gNB-CU needs to distinguish he source/serving base station/gNB-CU, to which the source/serving cell connected with the UE belongs, to transmit the information with the TA value.

If the target/candidate gNB-DU receives the random access preamble used for the early synchronization from the UE with the LTM configured later, the target/candidate base station/gNB-CU may include the corresponding TA value in the information to be transmitted to the corresponding source/serving gNB-DU through the corresponding source/serving base station/gNB-CU when transmitting an F1AP (e.g., UE Context Setup Request) message to the target/candidate gNB-DU so as to generate an LTM candidate configuration. To this end, the F1AP (e.g. UE context setup request) message transmitted by the target/candidate base station/gNB-CU to the target/candidate gNB-DU so as to generate the LTM candidate configuration may be transmitted by adding not only request information for RACH configuration and source gNB-DU ID information but also information for identifying the source base station/gNB-CU and/or information for identifying the UE associated with the source base station/gNB-CU to the early synchronization information request information element.

For another example, the F1AP (e.g., UE Context Setup Request) message based on the F1AP and transmitted by the target/candidate base station/gNB-CU to the target/candidate gNB-DU to generate the LTM candidate configuration may include at least one of followings: target/candidate cell ID, an LTM configuration identifier associated with the target/candidate cell ID (LTM-CandidateId, or LTM-CandidateId minus 1), source gNB-DU ID, source/serving cell ID, source base station/gNB-CU ID (e.g. Global NG-RAN Node ID), Source/Old NG-RAN node UE XnAP ID, and Target/New NG-RAN node UE XnAP ID. The source gNB-DU ID is used to uniquely identify the gNB-DU within at least one gNB-CU (The gNB-DU ID is configured at the gNB-DU and used to uniquely identify the gNB-DU at least within agNB-CU). In the case of a typical intra base station LTM, the gNB-CU was able to accurately send the TA information received from the target/candidate gNB-DU to the source gNB-DU only through the source gNB-DU ID information. However, the source gNB-DU ID alone may be insufficient for the inter-base station LTM. For example, if the source/serving base station/gNB-CU and the target/candidate base station/gNB-CU use the same gNB-DU ID, it may be difficult to send the TA information accurately.

NR-CGI (or NCGI: NR Cell Global Identifier), which globally identifies an NR cell, or a source/serving cell ID with an NCI (NR Cell identity) value included in the NR-CGI may uniquely identify the cell in the wireless network. Therefore, if that information is included, the gNB-CU and/or gNB-DU providing the source/serving cell may be uniquely distinguished.

If the source base station/gNB-CU ID (e.g. Global gNB ID or gNB ID included in the Global GNB ID) with a Global gNB ID that globally identifies the gNB or a gNB ID (Equal to the leftmost bits of the NR Cell Identity IE contained in the NR CGI IE of each cell served by the gNB) value included in the Global GNB ID is included, the target base station/gNB-CU may identify the source base station/gNB-CU and send the TA information. Alternatively, a gNB-DU ID that can uniquely identify the gNB-DU between base stations (within one Public Land Mobile Network (PLMN) or globally) may be defined to include the corresponding information. Alternatively, a source/serving cell ID (e.g., NR CGI) belonging to the source/serving base station may be included.

For another example, when the target/candidate gNB-CU receives a random access preamble used for the early synchronization from a UE with the configured LTM, the target/candidate gNB-CU may include at least one of followings: target/candidate cell ID, LTM configuration identification information associated with the target/candidate cell ID, source gNB-DU ID, source/serving cell ID, and source base station/gNB-CU ID in the XnAP message with the corresponding TA value transmitted to the source/serving base station/gNB-CU.

For another example, when the source/serving base station/gNB-CU receives the XnAP message including the corresponding TA value from the target/candidate base station/gNB-CU, the F1AP message containing the corresponding TA value transmitted by the source/serving base station/gNB-CU to the source/serving gNB-DU may include at least one of followings: the target/candidate cell ID, the LTM configuration identification information associated with the target/candidate cell ID, the source gNB-DU ID, the source/serving cell ID, and the source base station/gNB-CU ID.

For another example, the TA value included in the XnAP message including the corresponding TA value may represent a value included in a timing advance command field included in the LTM cell switch MAC CE. The corresponding TA value may represent an index value (index value TA used to control the amount of timing adjustment that the MAC entity has to apply in TS 38.213) for controlling timing adjustment that the MAC entity needs to apply in 3GPP TS 38.213.

For another example, the XnAP message including the corresponding TA value and/or the F1AP message may include the target/candidate cell ID, the LTM configuration identification information associated with the target/candidate cell ID, the target TA value, the preamble index, Random Access-Radio Network Temporary Identifier (RA-RNTI), source gNB-DU ID, source/serving cell ID, and source base station/gNB-CU ID. The TA value may be accurately transmitted and applied even through signaling that is not associated with the UE.

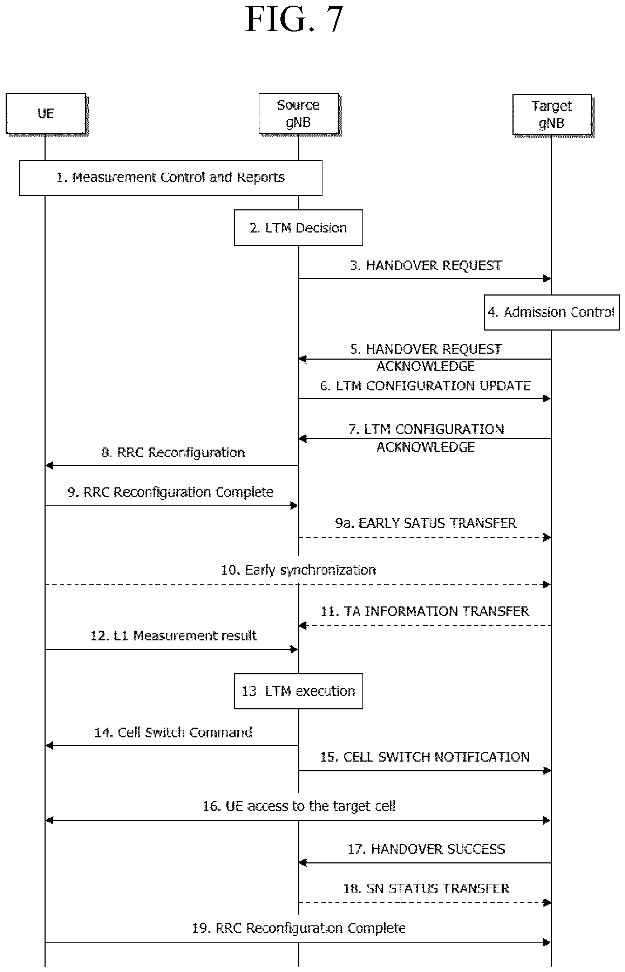

**FIG. 7** **illustrates the procedure for inter-gNB LTM according to an embodiment of the disclosure.**

Hereinafter, the procedure inter-gNB LTM will be described in detail with reference to FIG. 7.
1. The UE sends a MeasurementReport message (L3 measurement result) to the source gNB containing measurements of neighbouring cells.
2. The source gNB decides to configure inter-gNB LTM.
3. The source gNB requests inter-gNB LTM for one or more candidate cells belonging to one or more candidate gNB(s). The source gNB initiates a HANDOVER REQUEST message per candidate cell containing one candidate cell ID and the CSI resource configuration for subsequent LTM. The source gNB may request the candidate gNB(s) to provide the CSI-RS configuration.
4. Admission Control may be performed by the candidate gNB(s).
5. The candidate gNB(s) prepares the LTM configuration(s) and sends inter-gNB response (HO REQUEST ACKNOWLEDGE) to the source gNB including the generated RRC configurations for the accepted candidate cell. The candidate gNB(s) may also include the CSI-RS configuration upon request.
6. The source gNB sends an LTM CONFIGURATION UPDATE message to the candidate gNB(s) to update the LTM configurations of candidate cell(s). The source gNB may include the common CSI-RS resource configuration.
7. The candidate gNB(s) sends the LTM CONFIGURATION UPDATE ACKNOWLEDGE message to the source gNB. The candidate gNB(s) may also provide the CSI-RS report configuration.
8. The source gNB sends an RRCReconfiguration message to the UE.
9. The UE stores the LTM candidate configurations and sends an RRCReconfigurationComplete message to the source gNB.
9a If early data forwarding is applied, the source gNB sends the EARLY STATUS TRANSFER message.
10/11. Early synchronization to some LTM candidate cell(s) belonging to the candidate gNB(s) may be performed. The candidate gNB(s) sends the TA INFORMATION TRANSFER message to the source gNB if early TA acquisition is performed to the candidate gNB(s).
12. The UE performs L1 measurements on the configured LTM candidate cell(s) and transmits L1 measurement reports to the source gNB. L1 measurement should be performed as long as RRC reconfiguration (step 8) is applicable.
13. The source gNB determines to initiate inter-gNB LTM.
14. The source gNB decides to execute cell switch to a target cell and transmits an LTM cell switch command MAC CE triggering cell switch by including a target configuration ID which indicates the index of the candidate configuration of the target cell, a beam indicated with a TCI state or beams indicated with DL and UL TCI states, and a timing advance command for the target cell, if available. The UE switches to the target cell and applies the candidate configuration indicated by the target configuration ID.
15. The source gNB sends the CELL SWITCH NOTIFICATION message to the target gNB to indicate the initiation of Cell Switch command to the UE.
16. The target gNB detects the UE access. The UE performs the random access procedure towards the target cell, if UE does not have valid TA of the target cell as specified in clause 5.18.35 of TS 38.321[6].
17/18. The target gNB sends the HANDOVER SUCCESS message to the source gNB to inform that the UE has successfully accessed the target cell. In return, the source gNB sends the SN STATUS TRANSFER message following the principles described in step 7 of Intra-AMF/UPF Handover in clause 9.2.3.2.1.
19. The UE sends an RRCReconfigurationComplete message to the target gNB.

In the foregoing inter-base station (inter-gNB) LTM procedure, the base station may cancel the already prepared LTM depending on operation statuses. Here, the already prepared LTM may include an already prepared LTM handover. To this end, the target base station transmits a first message for cancelling the already prepared LTM to the source base station. The already prepared LTM (or already prepared LTM handover) may refer to a status that the target base station has received a handover request message including an LTM information request from the source base station and transmitted a handover acknowledge message including an LTM information response to the source base station.

Meanwhile, after transmitting the handover acknowledge message including the LTM information response to the source base station, the target base station may receive a second message for updating the LTM configuration from the source base station, in which the second message may include base station node UE Xn application protocol (XnAP) identity (ID) assigned by the target base station. Here, the second message may be the aforementioned LTM CONFIGURATION UPDATE message.

The assigned criticality of the LTM information request included in the handover request message may be set to reject, and the LTM information request may include channel state information (CSI) resource configuration information and/or information for requesting a channel state information-reference signal (CSI-RS) configuration.

The first message for canceling the already prepared LTM (or the already prepared LTM handover) may include at least one of a source base station node UE Xn application protocol (XnAP) identity (ID), a target base station node UE XnAP ID, and a new radio (NR) cell global identifier (CGI) for an LTM candidate cell to be canceled.

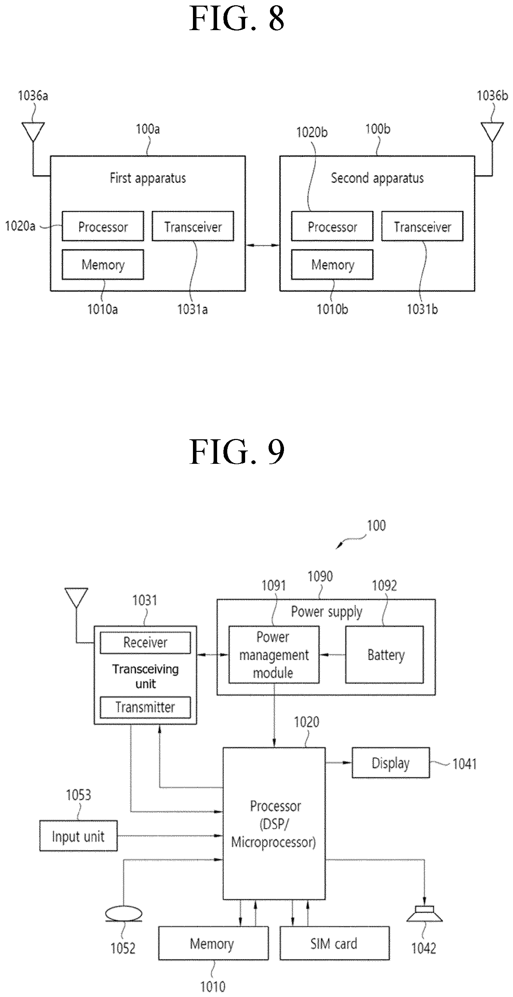

**FIG. 8** **is a block diagram showing apparatuses according to an embodiment of the disclosure.**

Referring to FIG. 8, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 103 1a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a and configured to store various types of information and/or instructions. The transceiver 1031a may be connected to the processor 1020a and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 9** **is a block diagram showing a terminal (e.g., user equipment: UE) according to an embodiment of the disclosure.**

In particular, FIG. 9 illustrates the previously described apparatus of FIG. 8 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of the constituent elements is referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

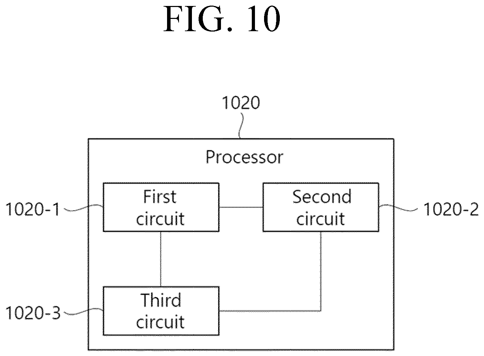

**FIG. 10** **is a block diagram of a processor in accordance with an embodiment.**

Referring to FIG. 10, a processor 1020 may include a plurality of circuits to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

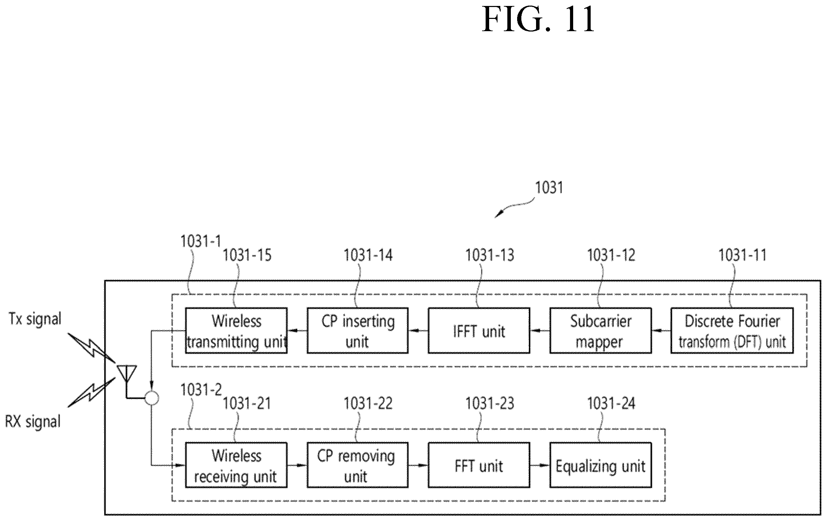

**FIG. 11** **is a detailed block diagram of a transceiver of a first apparatus shown in** **FIG. 8** **or a transceiving unit of an apparatus shown in** **FIG. 9****.**

Referring to FIG. 11, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the present disclosure, a signaling method is provided for supporting the LTM between the base stations for the UE in the wireless communication system, thereby effectively performing inter-base station LTM-based cell switching.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method of operating a source base station in a wireless communication system, the method comprising:
transmitting a handover request message comprising a layer 1 (L1)/layer 2 (L2) triggered mobility (LTM) information request to a target base station;
receiving a handover acknowledge message comprising an LTM information response from the target base station; and
receiving a first message for cancelling already prepared LTM from the target base station.

2. The method of claim 1, further comprising transmitting a second message for updating an LTM configuration to the target base station, after receiving the handover acknowledge message.

3. The method of claim 2, wherein the second message comprises base station node UE Xn application protocol (XnAP) identity (ID) assigned by the target base station.

4. The method of claim 1, wherein assigned criticality of the LTM information request is set to reject.

5. The method of claim 1, wherein the LTM information request comprises channel state information (CSI) resource configuration information.

6. The method of claim 5, wherein the LTM information request further comprises information for requesting a channel state information-reference signal (CSI-RS) configuration.

7. The method of claim 1, wherein the first message comprises at least one of source base station node UE Xn application protocol (XnAP) identity (ID), target base station node UE XnAP ID, and a new radio (NR) cell global identifier (CGI) for an LTM candidate cell to be canceled.

8. A method of operating a target base station in a wireless communication system, the method comprising:
receiving a handover request message comprising a layer 1 (L1)/layer 2 (L2) triggered mobility (LTM) information request from a source base station;
transmitting a handover acknowledge message comprising an LTM information response to the source base station; and
transmitting a first message for cancelling already prepared LTM to the source base station.

9. The method of claim 8, further comprising receiving a second message for updating an LTM configuration from the source base station, after transmitting the handover acknowledge message.

10. The method of claim 9, wherein the second message comprises base station node UE Xn application protocol (XnAP) identity (ID) assigned by the target base station.

11. The method of claim 8, wherein assigned criticality of the LTM information request is set to reject.

12. The method of claim 8, wherein the LTM information request comprises channel state information (CSI) resource configuration information

13. The method of claim 12, wherein the LTM information request further comprises information for requesting a channel state information-reference signal (CSI-RS) configuration.

14. The method of claim 8, wherein the first message comprises at least one of source base station node UE Xn application protocol (XnAP) identity (ID), target base station node UE XnAP ID, and a new radio (NR) cell global identifier (CGI) for an LTM candidate cell to be canceled.

15. A source base station in a wireless communication system, comprising:
at least one processor; and
at least one memory configured to store instructions and operably electrically connectable to the at least one processor,
wherein operations performed based on the instructions executed by the at least one processor comprise:
transmitting a handover request message comprising a layer 1 (L1)/layer 2 (L2) triggered mobility (LTM) information request to a target base station;
receiving a handover acknowledge message comprising an LTM information response from the target base station; and
receiving a first message for cancelling already prepared LTM from the target base station.
